# EUROPÄISCHE PATENTANMELDUNG

(11) **EP 3 316 424 A1**
(43) Veröffentlichungstag der Anmeldung: **02.05.2018**
(21) Anmeldenummer: 16195875.6
(22) Anmeldetag: 26.10.2016
(51) Int. Cl.: H01R 43/00, H01R 9/05, H01R 13/52

(54) **ÜBERGABEEINHEIT FÜR SEALS**

(71) Anmelder: Schleuniger Holding AG, 3608 Thun (CH)
(72) Erfinder: JENKINS, Mark, 6315 Alosen (CH); IMFELD, Ruedi, 6312 Steinhausen (CH); ZWEIFEL, Ernst, 6314 Unterägeri (CH)
(74) Vertreter: Patentbüro Paul Rosenich AG

(57) **Zusammenfassung**

Eine Übergabeeinheit für Seals (1) oder vergleichbare Kabelbestückungsbauteile für eine Kabelverarbeitungsanlage umfasst einen Aufnahmedorn (2), welcher für die Aufnahme von Seals (1) von einer Fördereinrichtung (3) und ihre Übergabe an eine Sealbestückungsvorrichtung im Takt der Sealverarbeitung ausgebildet ist. Eine Stützhülse (6) dient zur Abstützung des Seals (1), wobei ein Montagerohr (4) für den Seal (1) nach Durchstossen des Seals (1) in die Stützhülse (6) eintauchen kann. Die Stützhülse (6) ist dabei aus elastischem Material hergestellt und weist eine dem Seal (1) zugewandte ebene Stirnfläche auf.

## Beschreibung

Die Erfindung betrifft eine Übergabeeinheit für Seals oder vergleichbare Kabelbestückungsbauteile für eine Kabelverarbeitungsanlage, gemäss dem Oberbegriff des Anspruchs 1, sowie ein Verfahren zur Bestückung eines Kabels mit Seals oder vergleichbaren Kabelbestückungsbauteilen, gemäss dem Oberbegriff des Anspruchs 7.

Übergabeeinheiten für beispielsweise Seals bzw. Kabeltüllen weisen typischerweise zumindest einen Aufnahmedorn auf, welcher für die Aufnahme der Seals von einer Fördereinrichtung und ihre Übergabe an eine Sealbestückungsvorrichtung im Takt der Sealverarbeitung ausgebildet ist. Eine derartige Übergabeeinheit ist beispielsweise in der EP 1022821 A1 offenbart. Wie genauer in der EP 881720 A2 zu erkennen ist, kann ein Ende des Aufnahmedorns mit einer Stützhülse versehen oder in entsprechender Weise geformt sein, welche zur Abstützung des Seals beim Aufschieben auf den Dorn dient und in welche Stützhülse ein Montagerohr für den Seal nach Durchstossen des Seals eintauchen kann.

Bei diesen üblichen Übergabeeinheiten wird ein Seal, also eine flexible Kabeltülle, mittels eines Übergabedorns aus einer Förderschiene aufgepickt und anschliessend auf ein Montagerohr übergeben. Dabei taucht der Aufnahmedorn in das Montagerohr ein, wobei der Seal über das Montagerohr geschoben wird. Dabei bildet die Stützhülse des Aufnahmedorns einen Endanschlag für den Seal. Die aus Metall gefertigte Stützhülse ist stirnseitig mit einer Senkung versehen, die so gross und tief aufgebohrt ist, dass das Montagerohr mit definiertem Spiel in die Hülse passt und in diese eintauchen kann. Der Rest der Hülse dient als Abstützung, um den Seal sicher auf das Montagerohr zu schieben.

Dieses System bewährt sich seit Jahren und ist sehr zuverlässig, jedoch kann es vor allem bei sehr kleinen, weichen, dünnwandigen, stark aufgeweiteten Seals oder Seals mit sonstigen speziellen Eigenschaften, sowie bei bestimmten Dimensionen der Aufnahmedorne und Montagerohre aufgrund des kritischen Spaltes zwischen dem Aussendurchmesser des Aufnahmedorns und dem Innendurchmesser der Stützhülse zu Verletzungen der Seals führen. Diese Verletzungen entstehen beim Einklemmen des Seals zwischen dem Montagerohr und der Senkung in der Metall-Stützhülse.

Es war daher die Aufgabe der vorliegenden Erfindung, eine Übergabeeinheit sowie ein Verfahren zur Bestückung eines Kabels mit Seals derart auszubilden, dass Verletzungen der Seals bei allen Material- und Abmessungs-Verhältnissen sicher vermieden werden können.

Zur Lösung dieser Aufgabe sind die Übergabeeinheit und das Verfahren durch die Merkmale der unabhängigen Patentansprüche 1 und 7 gekennzeichnet. Weitere vorteilhafte Ausführungsformen sind in den Zeichnungen und in den abhängigen Ansprüchen dargelegt.

Insbesondere ist die Übergabeeinheit dadurch gekennzeichnet, dass die Stützhülse aus elastischem Material hergestellt ist und eine dem Seal zugewandte ebene Stirnfläche aufweist. Dadurch kann der kritische Luftspalt, an welchem eine Quetschung oder sonstige Verletzung des Seals beim Eintreten des Montagerohrs unter die Stützhülse wesentlich verringert werden, da das Montagerohr die elastische Stützhülse selbst aufweiten und sich Raum für das Eindringen unter die Stützhülse schaffen kann. Im übrigen Bereich kann sich der Seal vollflächig an der Stützhülse abstützen.

Bevorzugt ist weiters vorgesehen, dass die Stützhülse den Aufnahmedorn spielfrei umschliesst. Damit wird ein kritischer Luftspalt komplett vermieden und Quetschungen des Seals können so sicher verhindert werden. Jeglicher Ringspalt für das Eindringen des Montagerohrs unter die Stützhülse wird erst beim Eindringen selbst durch das Montagerohr selbst unter Aufweitung der elastischen Stützhülse gebildet.

Ein weiteres Merkmal der Erfindung besteht darin, dass die Höhe der Stützhülse in Richtung des Aufnahmedorns zumindest gleich gross ist, vorzugsweise grösser, als deren Durchmesser. Dieses Merkmal gewährleistet ein einfaches und leichtes Aufweiten der Stützhülse in radialer Richtung bei dennoch guter Stabilität und Stützwirkung für die Seals parallel zur Achse des Aufnahmedorns.

Bevorzugt ist weiters vorgesehen, dass die Stützhülse aus einem Material einer Shore-A-Härte im Bereich zwischen 60 und 120 angefertigt ist. Besonders bevorzugt ist dabei eine Ausführungsform, gemäss welcher die Stützhülse aus einem Material mit einer Shore-A-Härte von 90 +/- 5, angefertigt ist.

Um die Stützhülse je nach Anwendungszweck auswählen und die Übergabeeinheit anpassen zu können, oder auch um verschlissene Stützhülsen einfach austauschen zu können, ist eine bevorzugte Ausführungsform der Erfindung dadurch gekennzeichnet, dass die Stützhülse mittels einer lösbaren Verbindung auf dem Aufnahmedorn gehalten ist. Diese Verbindung kann insbesondere auch allein durch die Haftreibung der elastischen Stützhülse mit dem Aufnahmedorn bewerkstelligt sein. Soll sie ausgewechselt werden, so wird sie einfach abgezogen und eine neue Stützhülse auf den Aufnahmedorn aufgesteckt. Da der Innendurchmesser der Stützhülse typischerweise kleiner ist als der Aussendurchmesser des Aufnahmedorns an der für die Stützhülse vorgesehene Stelle, hält sie sich dort durch Haftreibung.

Die eingangs definierte Aufgabe wird auch durch ein Verfahren zur Bestückung eines Kabels mit Seals gelöst, das von einer Förderung der Seals durch eine Fördereinrichtung in eine für die Aufnahme durch eine Übergabeeinheit vorgesehene Aufnahmeposition ausgeht. Dort werden die Seals im Rahmen eines Vorwärtshubes eines Aufnahmedorns durch Einführen dieses Aufnahmedorns in den vorzugsweise mittigen Tunnel des Seals von der Fördereinrichtung aufgenommen, wonach der Aufnahmedorn in ein Montagerohr eintaucht. Dabei wird der Seal über das Montagerohr geschoben. Anschliessend erfolgt die Montage der Seals auf einem zu verarbeitenden Kabel.

Zur Lösung der Aufgabe ist dieses Verfahren erfindungsgemäss dadurch gekennzeichnet, dass die Aufnahme der Seals in einer Übergabeeinheit erfolgt, die gemäss einem der vorhergehenden Absätze ausgeführt ist und wobei die Seals sich an einer Stützhülse aus elastischem Material und mit einer dem Seal zugewandten ebene Stirnfläche abstützen.

Bevorzugt ist dieses Verfahren weiters dadurch gekennzeichnet, dass das Montagerohr im Zuge der Relativbewegung auf den Aufnahmedorn hin die Stützhülse vom Aufnahmedorn abhebt, sie aufweitet und sich anschliessend zwischen Aufnahmedorn und Stützhülse hineinschiebt.

Eine weitere vorteilhafte Variante des Verfahrens ist dadurch gekennzeichnet, dass das Montagerohr im Zuge der Relativbewegung vom Aufnahmedorn weg aus dem Zwischenraum zwischen Stützhülse und Aufnahmedorn zurückgezogen wird, wonach sich die Stützhülse wieder spielfrei um den Aufnahmedorn herumlegt.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind. Dabei können die in den Ansprüchen und in der Beschreibung erwähnten Merkmale jeweils einzeln für sich oder in beliebiger Kombination erfindungswesentlich sein.

Die Bezugszeichenliste ist Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Es zeigen dabei:
Fig. 1 eine schematische Darstellung des Ablaufes einer Bestückung von Kabeln mit Seals,
Fig. 2 eine vergrösserte Darstellung eines Aufnahmedorns mit einem aufgepickten Seal
Fig. 3 die Position des Aufnahmedorns kurz vor dem Durchstossen der Sealaufweitebacken,
Fig. 4 den teilweise in das Montagerohr eingetauchten Aufnahmedorn mit einem bereits nach oben gegen die Stützhülse geschobenen Seal, mit geöffneten Sealaufweitebacken,
Fig. 5 den Aufnahmedorn mit dem unter die Stützhülse eingeschobenen Montagerohr und Seal auf dem Montagerohr,
Fig. 6 eine Schnittdarstellung eines Aufnahmedorns mit herkömmlicher starrer Stützhülse sowie eine Darstellung des Eingangsbereiches der Stützhülse in vergrössertem Massstab, und
Fig. 7 eine Schnittdarstellung eines Aufnahmedorns mit erfindungsgemässer Stützhülse sowie eine Darstellung des Eingangsbereiches der Stützhülse in vergrössertem Massstab.

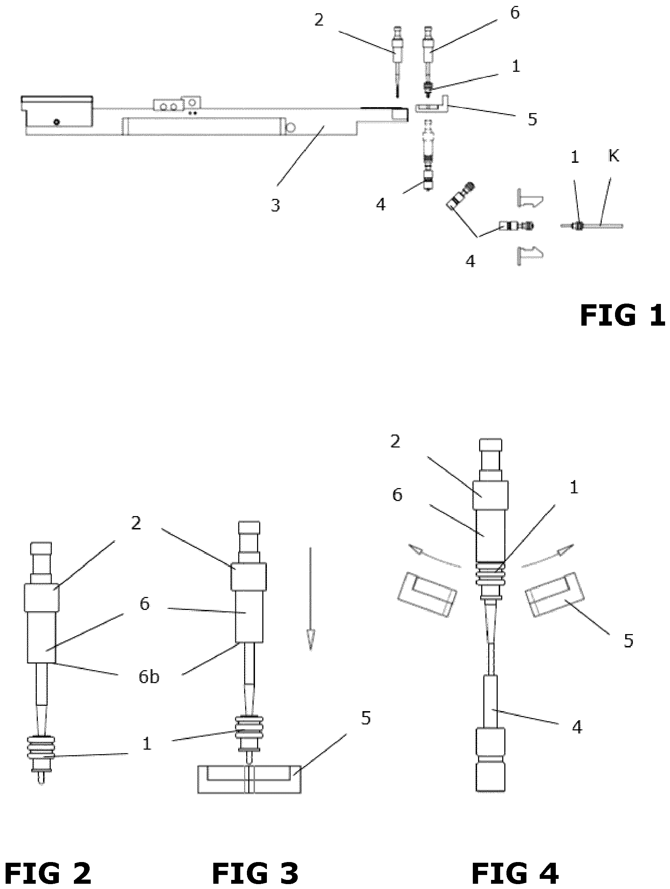

Fig. 1 zeigt von links nach rechts schematisch den Ablauf einer Bestückung von Kabeln K mit Seals 1. Der Seal 1, also eine flexible Kabeltülle, oder ein anderer Kabelbestückungsbauteil wird mittels des Aufnahmedorns 2 aus einer Förderschiene 3 aufgepickt und anschliessend in einer zweistufigen Vertikalbewegung auf ein Montagerohr 4 übergeben. Der Aufnahmedorn 2 führt dabei eine zweistufige Vertikalbewegung aus.

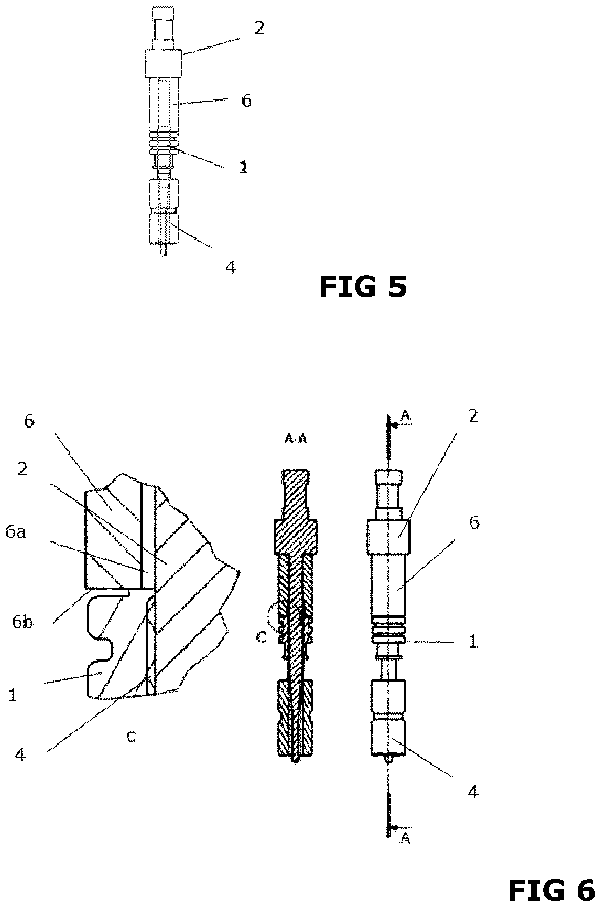

In der ersten Stufe durchstösst der Aufnahmedorn 2 in dem in Fig. 2 dargestellten Zustand die sogenannten Sealaufweitebacken 5, wie in Fig. 3 durch den Pfeil nach unten angedeutet ist. Diese Backen 5 sind mit elastischen Einsätzen bestückt, welche im Zentrum mit einer Bohrung versehen sind. Während der Aufnahmedorn 2 durch die Sealaufweitebacken 5 fährt, wird der sich auf dem Aufnahmedorn 2 befindliche Seal 1 gegen die Stützhülse 6 geschoben. Kurz bevor der Seal 1 die Stirnfläche 6b der Stützhülse 6 erreicht hat, werden die Sealaufweitebacken 5 beispielsweise mittels Nockensteuerung geöffnet damit der Seal 1 nicht weiter aufgeschoben oder gestaucht wird. Diese Stellung ist in Fig. 4 dargestellt, in welcher die Sealaufweitebacken 5 bereits offen sind. Es ist auch zu erkennen, dass dabei oder kurz danach die Spitze des Aufnahmedorns 2 bereits in das Montagerohr 4 eingetaucht ist. Durch weitere Bewegung von Aufnahmedorn 2 und Montagerohr 4 aufeinander zu wird der Seal 1 auf das Rohr 4 aufgeschoben. Diese Stellung ist in Fig. 5 dargestellt. Dabei taucht das Montagerohr 4 in die Senkung 6a der Stützhülse 6 ein, wobei der Seal potentiell verletzt wird durch Quetschung oder Scherung zwischen Montagerohr 4 und Stützhülse 6.

Fig. 6 zeigt die Verhältnisse bei herkömmlichen Stützhülsen 6 aus Metall, mit ringförmiger Ausnehmung 6a am vorderen Ende. Diese Senkung 6a ist so gross und tief aufgebohrt, dass das Montagerohr 4 mit definiertem Spiel in die Hülse 6 passt und in diese eintauchen kann. Das Montagerohr 4 ragt schliesslich ca. 0.5 - 1.5 mm über das der Stützhülse zugewandte Ende des Seals 1 hinaus und ragt unter die Stützhülse 6 hinein. Der übrige Teil der Stirnfläche 6b der Stützhülse 6 dient als Abstützung, um den Seal 1 sicher auf das Montagerohr 4 zu schieben.

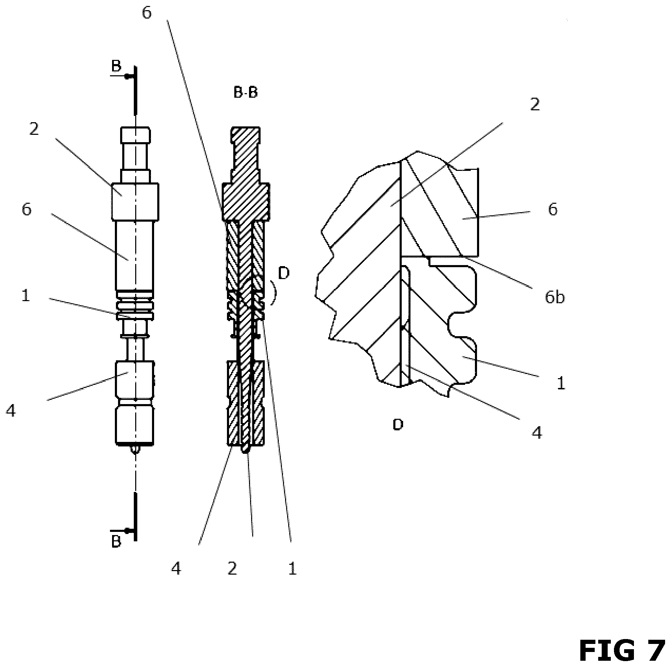

Fig. 7 hingegen zeigt die Verhältnisse für die erfindungsgemässe Stützhülse 6 aus elastischem Material, welche sich bevorzugt komplett ohne Spiel um den Aufnahmedorn 2 herum legt. Vor allem bei sehr kleinen, weichen, dünnwandigen, stark aufgeweiteten Seals oder Seals mit sonstigen speziellen Eigenschaften kann damit eine Verletzung der Seals 1 durch die Vermeidung des Einklemmens des Seals 1 zwischen dem Montagerohr und der - nun nicht mehr notwendigen - Senkung 6a in der Stirnfläche 6b der Stützhülse 6 vermieden werden. Zwischen der erfindungsgemässen Stützhülse 6 und der Aussenseite des Aufnahmedorns 6 ist kein Luftspalt vorhanden, sondern die flexible Stützhülse 6 schliesst wie eine Stangendichtung um den Aufnahmedorn 2 herum. Sie wird erst, ermöglicht durch ihre Elastizität, durch das Eintauchen in das Montagerohr 4 vom Montagerohr 4 selbst radial aufgeweitet. Es findet keine signifikante Stauchung in axialer Richtung statt, da durch das Schieben des Seals keine signifikante Belastung in dieser Richtung auftritt.

Bei diesem Vorgang kann der Seal 1 aber nicht mehr zwischen Rohr 4 und Aufnahmedorn 2 gelangen, sondern wird verletzungsfrei von der flexiblen Stützhülse 6 axial auf das Montagerohr 4 aufgeschoben, ohne dass irgendeine Quetschung, Scherung oder sonstige Beschädigung des Seals 1 stattfinden kann.

### Liste der Bezugszeichen

- 1: Seal
- 2: Aufnahmedorn
- 3: Förderschiene
- 4: Montagerohr
- 5: Sealaufweitebacken
- 6: Stützhülse
- 6a: Senkung der Stützhülse
- 6b: Stirnfläche der Stützhülse
- K: Kabel

## Patentansprüche

1. Übergabeeinheit für Seals (1) oder vergleichbare Kabelbestückungsbauteile für eine Kabelverarbeitungsanlage, umfassend einen Aufnahmedorn (2), welcher für die Aufnahme von Seals (1) von einer Fördereinrichtung (3) und ihre Übergabe an eine Sealbestückungsvorrichtung im Takt der Sealverarbeitung ausgebildet ist und dazu eine Stützhülse (6) zur Abstützung des Seals (1) aufweist, in welche Stützhülse (6) ein Montagerohr (4) für den Seal (1) nach Durchstossen des Seals (1) eintauchen kann, **dadurch gekennzeichnet, dass** die Stützhülse (6) aus elastischem Material hergestellt ist und eine dem Seal (1) zugewandte ebene Stirnfläche (6b) aufweist.

2. Übergabeeinheit nach Anspruch 1, **dadurch gekennzeichnet, dass** die Stützhülse (6) den Aufnahmedorn (2) spielfrei umschliesst.

3. Übergabeeinheit nach Anspruch 1 oder 2, **dadurch gekennzeichnet, dass** die Höhe der Stützhülse (6) in Richtung des Aufnahmedorns (2) zumindest gleich gross ist, vorzugsweise grösser, als deren Durchmesser.

4. Übergabeeinheit nach einem der Ansprüche 1 bis 3, **dadurch gekennzeichnet, dass** die Stützhülse (6) aus einem Material mit einer Shore-A-Härte im Bereich zwischen 60 und 120 angefertigt ist.

5. Übergabeeinheit nach Anspruch 4, **dadurch gekennzeichnet, dass** die Stützhülse (6) aus einem Material mit einer Shore-A-Härte von 90 +/- 5, angefertigt ist.

6. Übergabeeinheit nach einem der Ansprüche 1 bis 5, **dadurch gekennzeichnet, dass** die Stützhülse (6) mittels einer lösbaren Verbindung auf dem Aufnahmedorn (2) gehalten ist.

7. Verfahren zur Bestückung eines Kabels (K) mit Seals (1), umfassend eine Förderung der Seals (1) durch eine Fördereinrichtung (3) in eine für die Aufnahme durch eine Übergabeeinheit vorgesehene Aufnahmeposition, in welcher die Seals (1) im Rahmen eines Vorwärtshubes eines Aufnahmedorns (2) durch Einführen dieses Aufnahmedorns (2) in den mittigen Tunnel des Seals (1) von der Fördereinrichtung (3) aufgenommen werden, wonach der Aufnahmedorn (2) in ein Montagerohr (4) eintaucht, wobei der Seal (1) über das Montagerohr (4) geschoben wird, sowie die anschliessende Montage der Seals (1) auf einem zu verarbeitenden Kabel (K), **dadurch gekennzeichnet, dass** die Aufnahme der Seals (1) in einer Übergabeeinheit erfolgt, die gemäss einem der Ansprüche 1 bis 6 ausgeführt ist und wobei die Seals (1) sich an einer Stützhülse (6) aus elastischem Material und mit einer dem Seal (1) zugewandten ebene Stirnfläche (6b) abstützen.

8. Verfahren nach Anspruch 7, **dadurch gekennzeichnet, dass** das Montagerohr (4) im Zuge der Relativbewegung auf den Aufnahmedorn (2) hin die Stützhülse (6) vom Aufnahmedorn (2) abhebt, diese aufweitet und sich anschliessend zwischen Aufnahmedorn (2) und Stützhülse (6) hineinschiebt.

9. Verfahren nach Anspruch 7 oder 8, **dadurch gekennzeichnet, dass** das Montagerohr (4) im Zuge der Relativbewegung vom Aufnahmedorn (2) weg aus dem Zwischenraum zwischen Stützhülse (6) und Aufnahmedorn (2) zurückgezogen wird, wonach sich die Stützhülse (6) wieder spielfrei um den Aufnahmedorn (2) herumlegt.
